# EUROPEAN PATENT SPECIFICATION

(11) **EP 2 323 340 B1**
(45) Date of publication and mention of the grant of the patent: **01.10.2014**
(21) Application number: 09811002.6
(22) Date of filing: 09.04.2009
(51) Int. Cl.: H04M 15/00, H04L 12/14, H04L 29/06

(54) **METHOD AND APPARATUS FOR IDENTIFYING SESSION INFORMATION**
VERFAHREN UND VORRICHTUNG ZUR IDENTIFIZIERUNG VON SITZUNGSINFORMATIONEN
PROCÉDÉ ET APPAREIL D'IDENTIFICATION D'INFORMATIONS DE SESSION

(30) Priority: 03.09.2008 CN 200810212901
(43) Date of publication of application: 18.05.2011
(73) Proprietor: ZTE Corporation, Shenzhen, Guangdong 518057 (CN)
(72) Inventor: ZHOU, Xiaoyun, Guangdong 518057 (CN); ZONG, Zaifeng, Guangdong 518057 (CN); RUI, Tong, Guangdong 518057 (CN)
(74) Representative: Bongiovanni, Simone
(86) International application number: PCT/CN2009/071212
(87) International publication number: WO 2010/025627

(56) References cited:
- CN-A- 101 237 383
- KR-A- 20030 035 759
- US-A1- 2007 066 286

## Description

### Technical Field

The present invention relates to the communication field, in particular, to a method and an apparatus for identifying session information.

### Background Art of the Invention

EPS (Evolved Packet System) of the 3GPP (3rd Generation Partnership Project) is constituted by E-UTRAN (Evolved Universal Terrestrial Radio Access Network), MME (Mobility Management Entity), S-GW (Serving Gateway), P-GW (Packet Data Network Gateway), HSS (Home Subscriber Server), 3GPP AAA server (3GPP Authorization/Authentication/Accounting server), PCRF (Policy and Charging Rules Function) and other supporting nodes.

Wherein, S-GW is access gateway equipment connected with E-UTRAN for forwarding data between E-UTRAN and P-GW and being responsible for buffering the paging waiting data; and P-GW is the boarder gateway between EPS and PDN (Packet Data Network) responsible for the access of PDN and forwarding data between EPS and PDN, etc.

On one hand, PCRF is connected with the IP (Internet Protocol) service provided by the provider via Rx interface to obtain the service information; and on the other hand, PCRF is connected with the gateway equipment in the network via Gx/Gxa/Gxc interface to be responsible for initiating establishment of IP bearer, ensuring QoS (Quality of Service) of the service data, and controlling the charging.

EPS supports interworking with the non-3GPP network, and interworks with the non-3GPP network via S2a/b/c interface. The non-3GPP network includes trusted non-3GPP network and untrusted non-3GPP network. The trusted non-3GPP IP access network can directly connect to the P-GW via S2a interface; and the IP access of the untrusted non-3GPP network should be connected with P-GW via ePDG (Evolved Packet Data Gateway) whose interface with P-GW is S2b.

In the 3GPP network prior EPS, PCEF (Policy and Charging Enforcement Function) exists in P-GW. All functions can be controlled if only PCRF is connected with P-GW. PCRF exchanges information with P-GW via Gx interface. When the interface between P-GW and S-GW is based on PMIP (Proxy Mobile IP), BBERF (Bearer Binding and Event Report Function) is present in S-GW, and S-GW and PCRF exchange information via Gxc interface. When the trusted non-3GPP network accesses, the trusted non-3GPP access gateway is also resided with BBERF, and the trusted non-3GPP network access gateway exchanges the information with PCRF via Gxa interface. When the UE (User Equipment) roams, the interface between the home PCRF and the visited PCRF is S9 interface, meanwhile, AF (Application Function) providing service to the UE sends the service information for generating PCC (Policy and Charging Control) policy to PCRF via Rx interface.

The EPS system supports Multiple PDN access, and the UE can simultaneously access multiple PDNs via one or more P-GWs, i.e. one UE can simultaneously have multiple IP-CAN (IP-Connectivity Access Network) sessions.

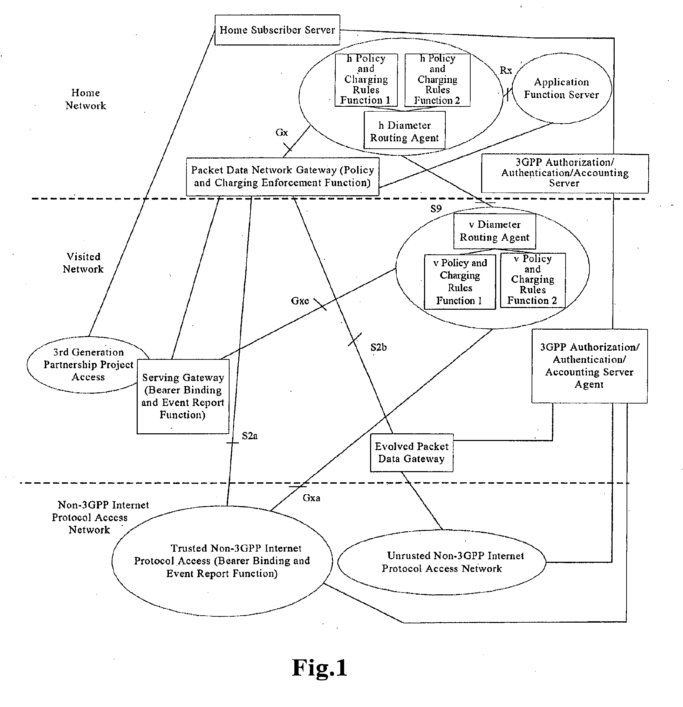

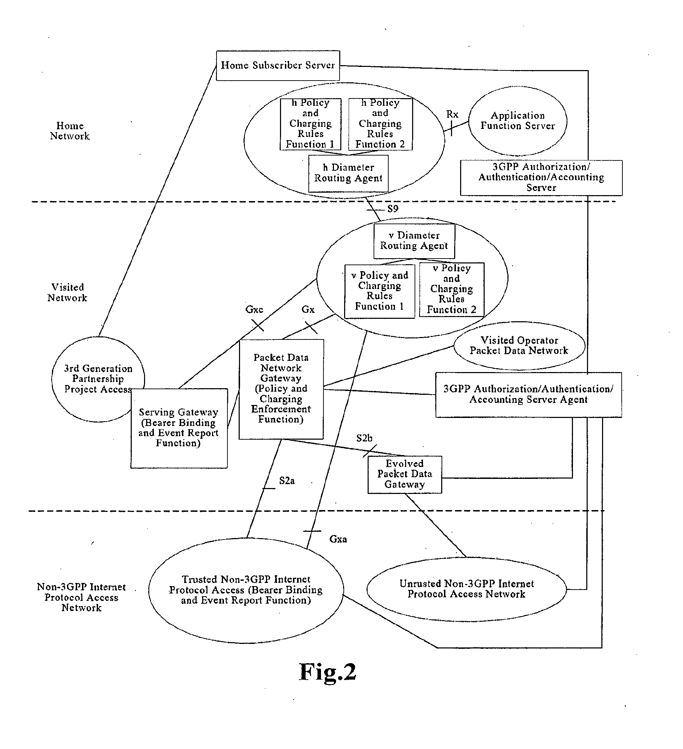

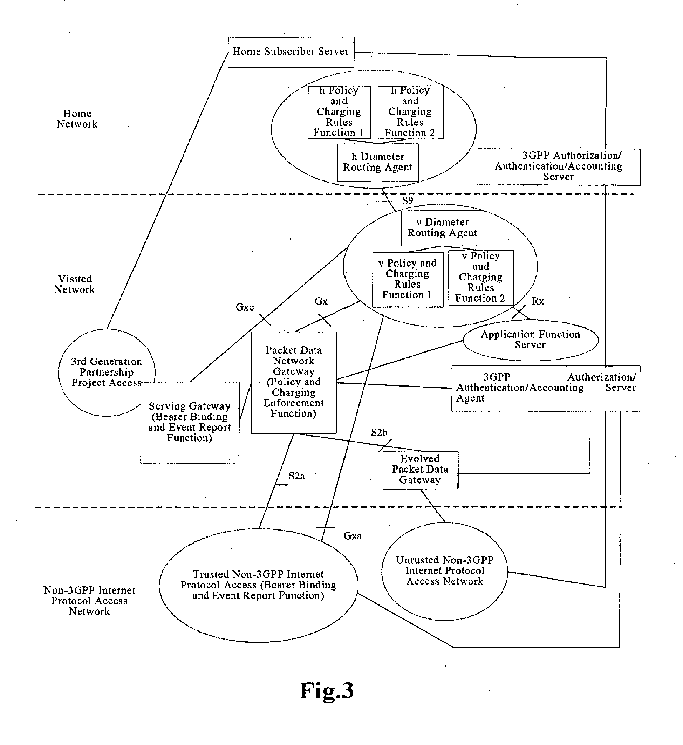

The EPS has three types of roaming architectures. The first type is the home routed. Figure 1 is the roaming architecture scheme of EPS of the home routed according to the prior art. As shown in Figure 1, P-GW is in the home network, and the home network provides the IP service (i.e. AF is in the home network); the second type is the local breakout and the home network operator providing the IP service. Figure 2 is the roaming architecture scheme of EPS of the Local Breakout and the home network provider providing the IP service according to the prior art. As shown in Figure 2, P-GW is in the visited network and the home network operator provides the IP service (i.e. AF is in the home network); and the third type is the local breakout and the visited network operator providing the IP service. As shown in Figure 3, P-GW is in the visited network, and the visited network operator provides the IP service (i.e. AF is in the visited network). For different roaming scenarios, the flows of PCC are different, and the functions performed by PCC network elements are also different.

In the current technology, the protocol used in the PCC frame is the Diameter application protocol developed from the Diameter Base Protocol, and the current PCC frame has defined the Diameter application protocol used in the non-roaming scenario, for instance, the application protocol used for Gx interface, the application protocol used for Rx interface and the application protocol used for Gxx interface (including Gxa and Gxc interfaces). In these application protocols, the message, command and AVP (Attribute Value Pairs), etc. for PCC are defined.

In the prior art, the IP connection of UE to one PDN network is called one IP-CAN session which will relate to multiple network elements. In order to obtain the policy control rules for controlling this IP-CAN session or to provide the information for setting the policy control rules, each network element will establish Diameter session with PCRF. Therefore, one IP-CAN session will be associated with a plurality of Diameter sessions, and these Diameter sessions are established, maintained and deleted using the Diameter protocol. At present, the Diameter sessions include Gx session established on Gx interface, Gxx session established on Gxx interface (including Gxa and Gxc) and Rx session established on Rx interface.

Currently, there are mainly the following three types of solutions for realization of the S9 roaming interface:
Solution 1: for each IP-CAN session of UE, vPCRF terminates Gx session, Gxx session or Rx session in the visited network, and a new S9 session is established between vPCRF and hPCRF via DRA (Diameter Routing Agent), i.e. one S9 session is used to transmit the information on Gx session, Gxx session and Rx session.
Solution 2: for each IP-CAN session of UE, vPCRF merely terminates Gx session, Gxx session in the visited network, and one S9 session is used to transmit the information on Gx session and Gxx session, but does not terminate Rx session in the visited network, and only forwards the message of Rx session to hPCRF, and vPCRF is taken as a Proxy.
Solution 3: for each UE, vPCRF terminates Gx sessions, Gxx sessions of all IP-CAN sessions in the visited network, one S9 session is used to transmit the information on Gx sessions and Gxx sessions of all IP-CAN sessions, but does not terminate Rx sessions of all IP-CAN sessions in the visited network, only forwards the message of Rx session to hPCRF, and vPCRF is taken as a Proxy.

The three solutions have the following problems:
(1) In the roaming architecture of the home routed, when BBERF is reselected (i.e. when the user equipment performs handover), hPCRF needs to simultaneously control two BBERFs, one called Primary BBERF and the other Non-Primary BBERF. The hPCRF simultaneously stores the respective QoS rules and statuses for the two BBERFs, respectively, and carries out different operations to the two BBERFs. For example, when hPCRF is to update the QoS rules, hPCRF will issue the updated QoS rules to the two BBERFs simultaneously. If the Primary BBERF fails to install the QoS rules successfully, it will make a report to hPCRF, and hPCRF will delete the same QoS rules in Non-Primary, and will delete the corresponding PCC rule in PCEF. If Non-Primary BBERF fails to install the QoS rules successfully, it will make a report to hPCRF, and hPCRF will merely update the QoS rules and status thereof stored for Non-Primary BBERF in one hPCRF, but does not carry out other operation. Of course, there are other different operations performed by hPCRF to Primary BBERF and Non-Primary BBERF, but unnecessary details will not be given herein. Since hPCRF carries out different operations to Primary BBERF and Non-Primary BBERF, hPCRF should discriminate from which BBERF that the information is reported (i.e. from which visited place the Gxx session comes). Meanwhile, when hPCRF issues the policy and information, it will also notify vPCRF to which Gxx session that the policy and information are issued.
   No matter in the solution 1 or the solution 2, there is merely one S9 session for transmitting Gxx sessions in the visited place, then, hPCRF cannot determine from which Gxx session that the information in the S9 session comes; likewise, when hPCRF issues the policy control information, vPCRF cannot determine to which Gxx session that the policy control information is issued.
(2) For the roaming architecture of local breakout and AF in the visited place, if there are a plurality of AFs providing the service information, hPCRF also should determine from which AF session that the service information comes, and stores for each AF the service information it provides. If the service information provided by a certain AF is updated, hPCRF should determine which service information is updated.
   For the solution 1, since there is merely one S9 session for transmitting all the Rx sessions in the visited network, hPCRF cannot determine from which Rx session that the service information in the S9 session comes.
(3) For the solution 3, when UE simultaneously accesses mutiple PDNs, one S9 session is used to transmit the information of Gxx or Gx session of mutiple IP-CAN sessions. For instance, if UE simultaneously accesses two PDNs in the manner of home routed, there will be two Gxx sessions in the visited network to transmit the information associated with the policy control, and one S9 session will transmit the information of two Gxx sessions simultaneously. If UE accesses two PDNs in the manner of local breakout, there will be two Gx sessions in the visited network in need of one S9 session for transmitting the information. If the UE accesses one PDN in the manner of home routed and accesses the second PDN in the manner of local breakout, there will be Gx session and Gxx session in the visited network in need of one S9 session for transmitting the information. Therefore, when there is one S9 session to transmit mutiple Gxx or Gx sessions of one UE in the visited network, hPCRF cannot determine from which one, namely, Gxx or Gx session, that the information in the S9 session comes.

Currently, in the related art, the effective solution has not been provided regarding the problem of incapability of determination when pieces of Diameter session information exist in the S9 session message.

"Hurtta (US 2007/0066286 A1) relates to inter-access mobility and service control"

### Summary of the Invention

The present invention is put forward regarding the problem of incapability of determination when pieces of Diameter session information exist in the S9 session message. Therefore, the principle objective of the present invention is to provide a solution for identifying the session information so as to solve the problem

In order to accomplish the objective, the present invention, in one aspect, provides a method for identifying session information.

The method for identifying session information according to the present invention is applied to the network system comprising a sending end PCRF, a receiving end PCRF, BBERF, PCEF and/or AF. The method includes: the sending end PCRF sends an S9 session message to the receiving end PCRF in order to transmit information of the Diameter session, wherein the S9 session message carries the identification information identifying the Diameter session uniquely; the receiving end PCRF determines the Diameter session corresponding to the information of Diameter session carried by the S9 session message according to the identification information.

Preferably, in cases where the sending end PCRF is vPCRF and the receiving end PCRF is hPCRF, the sending end PCRF sending the S9 session message to the receiving end PCRF specifically includes:the vPCRF sends the S9 session message to the hPCRF in order to transmit the information of one or more pieces of Diameter session received from a visited network, wherein, the S9 session message carries identification information identifying the Diameter session uniquely.

Preferably, when the Diameter session is established, the vPCRF sending the S9 session message to the hPCRF specifically includes:the vPCRF terminates the Diameter session from the visited network;the vPCRF transmits the information of Diameter session to the hPCRF using the S9 session message, the identification information carried by the S9 session message being configured to identify the Diameter session of the information of Diameter session carried;after the hPCRF determines the Diameter session according to the identification information, the method further includes:the hPCRF establishes context for the Diameter session and stores the information of Diameter session carried, according to the identification information.

Preferably, when the Diameter session is modified, the vPCRF sending the S9 session message to the hPCRF specifically includes:the vPCRF terminates the Diameter session from the visited network;the vPCRF transmits request and/or modification information carried by the Diameter session to the hPCRF using the S9 session message, the identification information carried by the S9 session message being configured to identify the Diameter session of the request and/or modification information carried;after the hPCRF determines the Diameter session according to the identification information, the method further includes:the hPCRF updates context established for the Diameter session according to the identification information.

Preferably, when the Diameter session is terminated, the vPCRF sending the S9 session message to the hPCRF specifically includes:the vPCRF terminates the Diameter session from the visited network;the vPCRF transmits termination indication information carried by the Diameter session to the hPCRF using the S9 session message, the identification information carried by the S9 session message being configured to identify the Diameter session of the termination indication information carried;after the hPCRF determines the Diameter session according to the identification information, the method further includes:the hPCRF deletes context for the Diameter session according to the identification information.

Preferably, in cases where the sending end PCRF is hPCRF and the receiving end PCRF is vPCRF, the sending end PCRF sending the S9 session message to the receiving end PCRF specifically includes:the hPCRF sends the S9 session message to the vPCRF in order to transmit the information of one or more pieces of Diameter sessions, wherein, the S9 session message carries identification message carries identification information identifying the Diameter session uniquely;after the hPCRF determines the Diameter session according to the identification information, the method further includes:the vPCRF sends the information of Diameter session carried by the S9 session message to network element corresponding to the Diameter session.

Preferably, the hPCRF sending the S9 session message to the vPCRF further includes:the hPCRF modifies control policy of one or more Diameter sessions, and sends the control policy to the vPCRF using the S9 session message, wherein, the identification information carried by the S9 session message is configured to identify Diameter session receiving the control policy.

Preferably, the identification information carried by the S9 session message uses session identity of the Diameter session; or the vPCRF assigns the identification information for the Diameter session, wherein, the identification information uniquely identifies one IP-Connectivity Access Network session in the vPCRF.

Preferably, the Diameter session includes one selected from Gxx session, Gx session, Rx session.

Preferably, the BBERF is located in a Serving Gateway or a trusted non-3GPP access gateway.

In order to accomplish the above objective, the present invention, on the other aspect, further provides apparatus for identifying session information.

The apparatus for identifying session information according to the present invention are arranged in the network system comprising a sending end PCRF and a receiving end PCRF. The apparatus comprise: an identifying module, configured to identify the Diameter session is related to the information of Diameter session carried by the S9 session message; a sending module, configured to send the S9 session message which carries the identification information identifying the Diameter session uniquely; a receiving module, configured to receive the S9 session message; and a determining module, configured to determine the Diameter session corresponding to the information of Diameter session carried by the S9 session message according to the identification information.

By the above technical solutions in the present invention, when the S9 session is used to transmit the Diameter sessions concerning Gxx, Gx and Rx, etc., the sending end PCRF is capable of acquiring from which one, namely, Gxx, Gx or Rx session, that the session information comes, according to the identification information carried by the S9 session for identifying the Diameter session information uniquely, and when the sending end PCRF issues the policy control information, it is capable of issuing the policy control information to corresponding Gxx session, Gx session or AF session according to the unique identification information carried by the S9 session thereby, it solves the problem of incapability of determination when pieces of Diameter session information exist in the S9 session message, and further consummates the application flow of the realization of the S9 roaming interface in the policy charging control frame.

### Description of the Accompanying Drawings

The accompanying drawings constitute a part of the Description for further understanding the present invention. The exemplary embodiments of the present invention and descriptions thereof explain the present invention without unduly limiting the invention. In the drawings:
Figure 1 is a roaming architecture of EPS of the home routed according to the prior art;
Figure 2 is a roaming architecture of EPS of the local breakout and the home network operator providing the IP service according to the prior art;
Figure 3 is a roaming architecture of EPS of the local breakout and the visited network operator providing the IP service according to the prior art;
Figure 4 is a flow chart of the method for identifying session information according to the embodiments of the present invention;
Figure 5 is a flow chart according to the first embodiment of the present invention;
Figure 6 is a flow chart according to the second embodiment of the present invention;
Figure 7 is a flow chart according to the third embodiment of the present invention;
Figure 8 is a flow chart according to the fourth embodiment of the present invention;
Figure 9 is a flow chart according to the fifth embodiment of the present invention; and
Figure 10 is a block diagram of apparatus for identifying session information according the embodiments of the present invention.

### Detailed Description of the Embodiments

Next, the preferred embodiments of the present invention are illustrated with reference to the accompanying drawings. It should be understood that the preferred embodiments herein are merely explain the present invention but not limit the invention. It should be indicated that the embodiments in the present application and the features therein can be combined when they are not conflicted.

### Functionality Summary

Viewing the problem of incapability of determination when pieces of Diameter session information exist in the S9 session message in the related art, a solution for identifying session information is provided in the embodiments of the present invention, i.e. when the S9 session is established between vPCRF and hPCRF to transmit the information of Gxx session, Gx session and Rx session (or to merely transmit Gxx session and Gx session), a globally unique identity is used for identifying from which one, namely, Gxx, Gx or Rx session, that the information comes; moreover, when hPCRF issues the information to vPCRF via the S9 session, a globally unique identity is also used for identifying to which one, namely, Gxx, Gx or Rx session, that the information is issued. Thereby, vPCRF is capable of issuing the information to corresponding Gxx session, Gx session or AF session.

### Method Embodiments

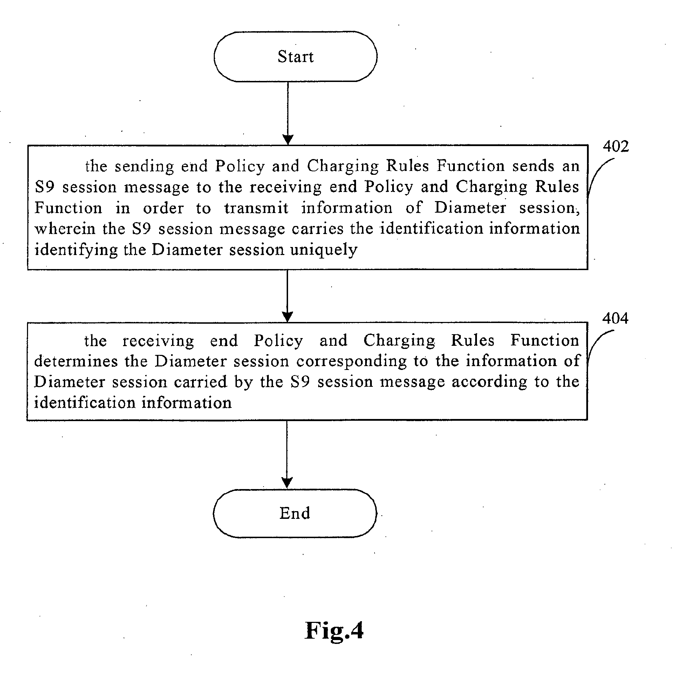

A method for identifying session information according to the embodiments of the present invention is provided. The method can be applied to the network comprising a sending end PCRF, a receiving end PCRF, BBERF, and/or AF. The frame of the network environment is as shown in Figure 1 to Figure 3. Figure 4 is the flow chart of the method for identifying session information according to the embodiments of the present invention. As shown in Figure 4, the method includes the following steps 402 to 404:
Step 402: the sending end PCRF sends an S9 session message to the receiving end PCRF in order to transmit the information of Diameter session , wherein the S9 session message carries the identification information identifying the Diameter session uniquely;
Step 404: the receiving end PCRF determines the Diameter session corresponding to the information of Diameter session carried by the S9 session message according to the identification information.

Preferably, the sending end PCRF can be vPCRF and the receiving end PCRF can be hPCRF; or preferably, the sending end PCRF can be hPCRF and the receiving end PCRF can be vPCRF.

Wherein, the identification information carried by the above S9 session message uses the session identity of the Diameter session; or vPCRF assigns the identification information for the Diameter session, in which, the identification information identifies one IP-CAN session uniquely in vPCRF.

The Diameter session in the present invention particularly refers to one selected from Gxx session, Gx session and Rx session.

By the above embodiments, when the S9 session is used to transmit the Diameter sessions concerning Gxx, Gx and Rx, etc., the sending end PCRF is capable of acquiring from which one, namely, Gxx, Gx or Rx session that the session information comes, according to the unique identification information carried by the S9 session for identifying the session information, moreover, when the sending end PCRF issues the policy control information, it is capable of issuing the policy control information to corresponding Gxx session, Gx session or AF session according to the unique identification information carried by the S9 session.

Next, the embodiments of the present invention will be described using different EPS roaming architecture scenarios.

It should be indicated that the steps shown in the following flow charts can be carried out in a computing system with, for instance, a set of commands executable by computer, and though the logical orders are shown in the flow charts, in some circumstances, the steps shown or described can be executed in a different order.

### Embodiment 1

The embodiment describes the flow of IP-CAN session establishment that UE accesses EPS via E-UTRAN or trusted non-3GPP access gateway when UE is under the roaming scenario of home routed. Wherein, when E-UTRAN is used for access, PMIPv6 protocol is used between S-GW and P-GW; and when the trusted non-3GPP access gateway is used for access, PMIPv6 protocol is used between the access gateway and P-GW.

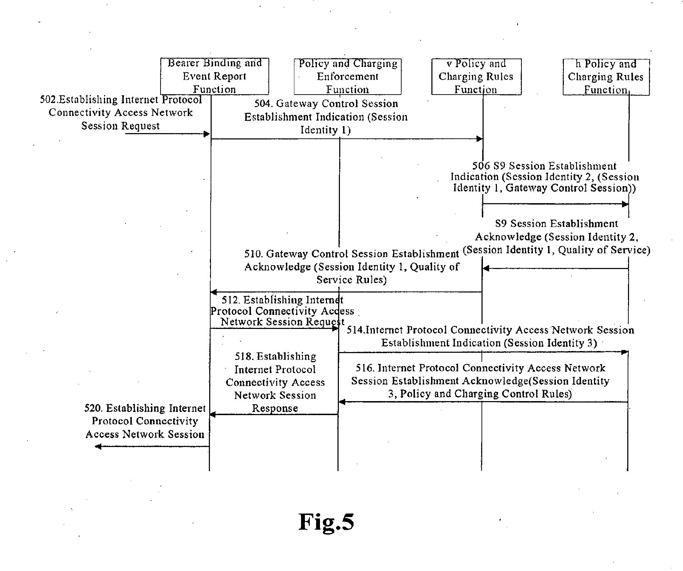

In this embodiment, the sending end PCRF is vPCRF and the receiving end PCRF is hPCRF, as shown in Figure 5. The method includes steps 502 to 520 as follow:
Step 502, BBERF receives the message requesting establishment of IP-CAN session, and BBERF obtains the UE identity (NAI(Network Access Identity)), PDN (Packet Data Network) identity, access information for setting the policy, wherein the access information includes the network identify where BBERF is located, the current location information of UE, etc., and wherein BBERF can be located in S-GW or the trusted non-3GPP access gateway;
Step 504, BBERF sends the "gateway control session (Gxx session) establishment indication" message to vPCRF, wherein the "gateway control session establishment indication" message carries the UE identity NAI, PDN identity, access information configured to set the policy and the session identity 1, and wherein the session identity 1 is assigned by BBERF for identifying the Diameter session to be established between BBERF and vPCRF. The Diameter base protocol ensures the session identity 1 globally unique;
Step 506, vPCRF determines that UE uses the home routed and that hPCRF supports the function of Gxx interface according to the PDN identity and the roaming agreement. The vPCRF terminates the Gxx session and initiates establishment of a new Diameter session with hPCRF. The vPCRF sends to hPCRF the S9 session establishment indication message that includes the session identity 2 assigned by the vPCRF (equivalent to step 402), NAI, PDN identity carried by the "gateway control session establishment indication" message in step 504, access information for setting the policy, the reason for establishing the S9 session (i.e. the gateway control session establishment), moreover, the message also carries the session identity 1 for identifying that the access information carried by the message for setting the policy is associated with Gxx session (gateway control session) established in step 504;
Step 508, hPCRF interworks with SPR (Subscription Profile Repository) according to NAI, PDN identity, to obtain the subscription information of UE, and to set PCC rules, QoS rules and event triggers according to the network policy and the access information reported, etc. The hPCRF sends to vPCRF the S9 session establishment acknowledge message that carries the session identity 2 identifying the S9 session, QoS rules and event triggers and the session identity 1, wherein, the session identity 1 is configured to identify that the QoS rules and the event triggers are associated with Gxx session;
Step 510, the vPCRF finds corresponding Gxx session between BBERF and vPCRF according to the received session identity 1 (equivalent to step 404), and sends to BBERF the gateway control session establishment acknowledge message that carries QoS rules and event triggers obtained from the S9 session establishment acknowledge message. BBERF installs the QoS rules and the event triggers.

Wherein, vPCRF is capable of modifying the QoS rules and the event triggers issued by hPCRF according to the policy of the visited network, thereby, the modified QoS rules and event triggers are issued in step 510, and BBERF installs the same.
Step 512, BBERF sends to P-GW the message requesting establishment of IP-CAN session. The message carries the information such as UE identity NAI, PDN identity. In the implementation, the message requesting establishment of IP-CAN session can be a proxy binding update message;
Step 510 and step 504 can be executed simultaneously, and it is unnecessary to wait for the message returned from step 510.
Step 514, since it is the home routed, P-GW is in the home network. P-GW allocates IP address for UE, and PCEF residing in P-GW sends to hPCRF the IP-CAN session establishment indication message that carries UE identity NAI, IP address, PDN identity and access information for making the policy decision and the session identity 3 assigned by PCEF for Gx session to be established, etc.;
Step 516, hPCRF associates this message with the message in 506, according to the NAI and PDN identity, and sends associated PCC rules and event triggers to PCEF via the IP-CAN session establishment acknowledge message. After receiving the acknowledge message, PCEF installs the issued PCC rules and event trigger and the session identity 3;

Moreover, hPCRF also can modify the PCC rules previously made according to the access information provided by PCEF for making the policy decision, thereby, hPCRF issues the modified PCC rules.
Step 518, PCEF returns to BBERF the response to establishment of the IP-CAN session. In the implementation, the response to establishment of IP-CAN session can be a proxy binding update acknowledge message. This message does not need to wait for the acknowledge message in step 516;
Step 520, BBERF returns the response to establishment of IP-CAN session.

In other embodiments, vPCRF can assign one identity for Gxx session established in step 504, instead of using the session identity 1 assigned by BBERF to Gxx session in step 504. Of course, this identity assigned by vPCRF must ensure that the IP-CAN session in vPCRF directed to UE is globally unique. Once vPCRF assigns this identity for Gxx, this identity can be used to associate with Gxx session established in step 504 in vPCRF, S9 session and hPCRF.

The flow of IP-CAN session establishment that UE accesses EPS via the trusted non-3GPP access gateway with DSMIPv6 is substantially similar to the above embodiments when UE is under the roaming scenario of the home routed. Unnecessary details will not be given herein.

### Embodiment 2

The embodiment describes the IP-CAN session modification flow caused by reselection that occurs to BBERF (i.e. the user equipment performs handover), after establishing IP-CAN session that UE accesses EPS via E-UTRAN or the trusted non-3GPP access gateway, as the flow shown in Embodiment 1 when UE is under the roaming scenario of the home routed. Wherein, when E-UTRAN is used for access, PMIPv6 protocol is used between S-GW and P-GW; and when the trusted non-3GPP access gateway is used for access, PMIPv6 protocol is used between the access gateway and P-GW.

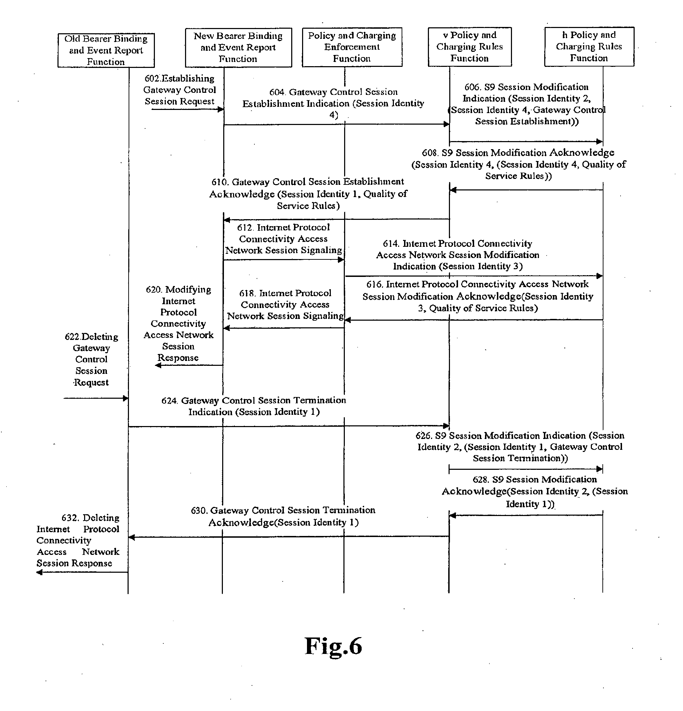

In this embodiment, the sending end PCRF is vPCRF and the receiving end PCRF is hPCRF, as shown in Figure 6. The method includes steps 602 to 632 as follow:
Step 602, a new BBERF receives the message requesting establishment of gateway control session, and the new BBERF obtains the UE Identity NAI,, PDN identity and access information configured to set the policy, etc., wherein the access information includes the network identify where new BBERF is located, the current location information of UE, etc.
Step 604, the new BBERF sends to vPCRF the "gateway control session establishment indication" message that carries the UE identity NAI, PDN identity and the session identity 4, wherein, the session identity 4 is assigned by the new BBERF for identifying the Diameter session to be established between the new BBERF and vPCRF. The Diameter base protocol ensures the session identity 4 globally unique;
Step 606, vPCRF determines the Context before the handover of UE, Gxx session and corresponding S9 session according to the UE identity NAI and PDN identity. The vPCRF sends to hPCRF the S9 session modification indication message (equivalent to step 402) that carries the session identity 2 assigned to this S9 session in the S9 session modification indication message, and simultaneously carries the new access information of UE and Gxx session identity 4 newly established by the session identity. This message also carries the reason for modifying the S9 session, i.e. the gateway control session establishment.
Step 608, hPCRF finds the context before the handover of UE according to the session identity 2 of the S9 session, and re-sets the PCC rules and QoS rules according to the new access information of UE. Meanwhile, hPCRF stores a new copy of QoS rules for Gxx session corresponding to the session identity 4. The hPCRF sends to vPCRF the S9 session modification acknowledge message that carries the new QoS rules and the session identity 4;

The hPCRF is capable of setting the new event triggers that is to be issued together with the QoS rules via the S9 session modification acknowledge message.
Step 610, vPCRF finds corresponding Gxx session according to the session identity 4 (equivalent to step 404), and sends to the new BBERF the gateway control session establishment acknowledge message that carries the new QoS rules, wherein, the new BBERF updates the QoS rules;
If hPCRF issues a new event triggers, vPCRF will issue the same to the new BBERF which updates the event triggers.

The vPCRF also is capable of modifying the QoS rules and the event triggers, according to the present policy, and issues the same to the new BBERF.
Step 612, the new BBERF sends to PCEF the IP-CAN session signaling message that carries the UE identity NAI and PDN identity. The message is a proxy binding update message of PMIPv6 in execution;
Step 614, PCEF finds the corresponding context (PCC rules, event triggers and other information) before the handover of UE according to the UE identity NAI and PDN identity, and sends to hPCRF the IP-CAN session modification indication message that carries the session identity 3;
Step 616, the hPCRF finds the PCC rules newly set in step 504 according to the session identity 3, and sends the same to PCEF via the IP-CAN session modification acknowledge message. PCEF updates the PCC rules;
Step 618, PCEF returns the IP-CAN session signaling to BBERF. The message is a proxy binding update acknowledge message in execution;
Step 620, the new BBERF returns the message responding to modification of IP-CAN session.
Step 622, the Old BBERF receives the message requesting to delete the gateway control session. The message carries the UE identity NAI and PDN identity;
Step 624, the Old BBERF finds the corresponding context before the handover of UE and Gxx session according to the UE identity NAI and PDN identity. The Old BBERF sends to vPCRF the gateway control session termination indication message that carries the termination indication and session identity 1;
Step 626, vPCRF finds corresponding S9 session according to the session identity, and sends to hPCRF the S9 session modification indication. The message carries the S9 session identity 2 and simultaneously carries the termination indication and the session identity 1, and the reason for modifying the S9 session (i.e. gateway control session termination);
Step 628, hPCRF determines that Gxx session corresponding to this identity will be deleted according to the session identity 2, therefore, the hPCRF also deletes the information of the Gxx session thereon and returns the S9 session modification acknowledge message that carries the session identity 1;
Step 639, vPCRF finds corresponding Gxx session according to the session identity 1, as sends to BBERF the gateway control session termination confirmation;
Step 632, the Old BBERF returns the message responding to deletion of the IP-CAN session.

With referent to Figure 6 it can be seen that from steps 604 to 630, there are two Gxx sessions, and hPCRF confirms the two Gxx sessions, respectively, according to the session identity 1 and the session identity 4. From steps 602 to 614, the Old BBERF acts as Primary BBERF, and the New BBERF acts as Non-Primary BBERF; and from steps 616 to 630, the Old BBERF acts as Non-Primary BBERF and the New BBERF acts as Primary BBERF. In cases where there are two Gxx sessions, if BBERF updates the QoS rules, hPCRF will perform different operations to the two BBERFs.

### Embodiment 3

The embodiment describes the gateway control session modification flow when BBERF receives the triggers and new QoS rules are requested and/or triggers are applied, as in the handover flow shown in Embodiment 2, after establishing IP-CAN session that UE accesses EPS via E-UTRAN or trusted non-3GPP access gateway, as in the flow shown in Embodiment 1, when UE is under the roaming scenario of the home routed.

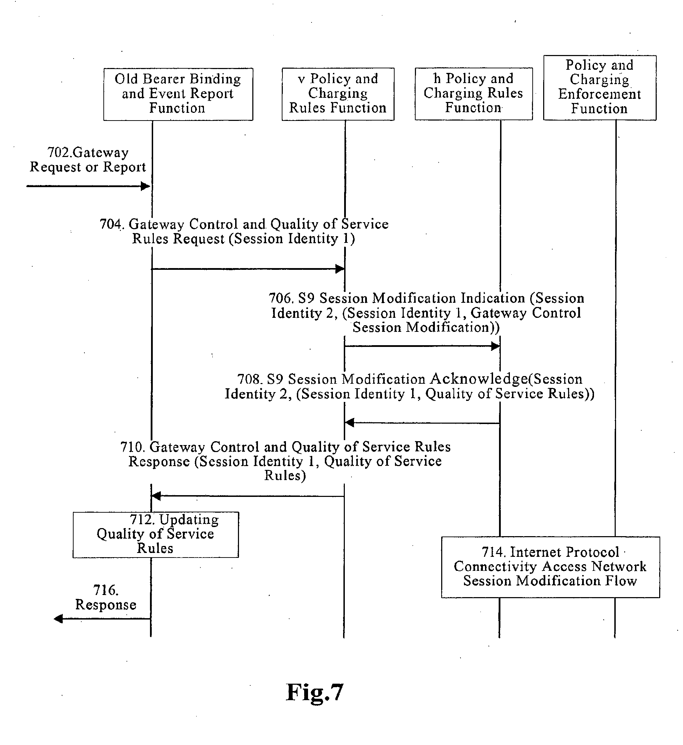

In this embodiment, the sending end PCRF is vPCRF and the receiving end PCRF is hPCRF, as shown in Figure 7. The method includes steps 702 to 716 as follow:
Step 702, the Old BBERF receives the request message requesting report of an event or requesting QoS rules, or requesting both;
Step 704, the Old BBERF sends to vPCRF the gateway control and QoS rules request message that carries the new resource request information and/or event report information, and the session identity 1 assigned in the gateway control session establishment indication message;
Step 706, after receiving the gateway control and QoS rules request message, vPCRF finds corresponding S9 session according to the session identity 1, and sends to hPCRF the S9 session modification indication message (equivalent to step 402), wherein, the session identity 2 assigned to this S9 session during S9 session establishment indication message is included in the S9 session modification indication message, and simultaneously carries the new resource request information and/or event report information carried by the gateway control and QoS rules request message and the session identity 1;
Step 708, hPCRF finds the context of this Gxx session stored in hPCRF according to the session identity 2 and the session identity 1, including QoS rules, event triggers, etc., and PCC rules corresponding to this Gxx session. Meanwhile, the Old BBERF is determined as Primary BBERF, therefore, hPCRF re-sets the PCC and QoS rules according to the new resource request information and/or event report information, etc., and sends the same to vPCRF via the S9 session modification acknowledge message that carries the QoS rules and the session identity 1;

The hPCRF also can update the event triggers that are issued together with the updated QoS rules.

Step 710, vPCRF finds corresponding Gxx session according to the session identity 1 (equivalent to step 404), and sends to the Old BBERF the gateway control and QoS rules response message that carries the QoS rules and/or event triggers and the session identity 1.
Step 712, the Old BBERF updates the QoS rules and/or event triggers;
Step 714, hPCRF initiates the IP-CAN session modification flow;
Step 716, the Old BBERF returns the modification response message.

In step 708, if hPCRF finds that the Old BBERF has become Non-Primary BBERF, in the S9 session modification acknowledge message, hPCRF will return the rejection information.

Similarly, if the New BBERF receives the request information requesting report of the event or requesting new QoS rules, in step 706, the S9 session modification request message of vPCRF will carry the session identity 4 and resource request information and/or event report information, hPCRF determines that the New BBERF as Primary BBERF, and new QoS rules and/or event triggers are set. The S9 session modification acknowledge message carries the session identity 4 and QoS rules and/or event triggers to be returned to the New BBERF. If hPCRF determines the new BBERF as Non-Primary BBERF, it will return the rejection message.

After establishing the IP-CAN session that UE accesses EPS via the trusted non-3GPP access gateway with DSMIPv6 protocol, the modification flow caused by requesting new QoS rules by BBERF is similar to this. Unnecessary details will not be given herein.

### Embodiment 4

This embodiment describes the gateway control session modification flow when hPCRF receives the triggers requesting the new QoS rules and/or the event triggers, as in the handover flow shown in Embodiment 2, after establishing the IP-CAN session that UE accesses EPS via E-UTRAN or the trusted non-3GPP access gateway, as in the flow shown in Embodiment 1, when UE is under the roaming scenario of the home routed.

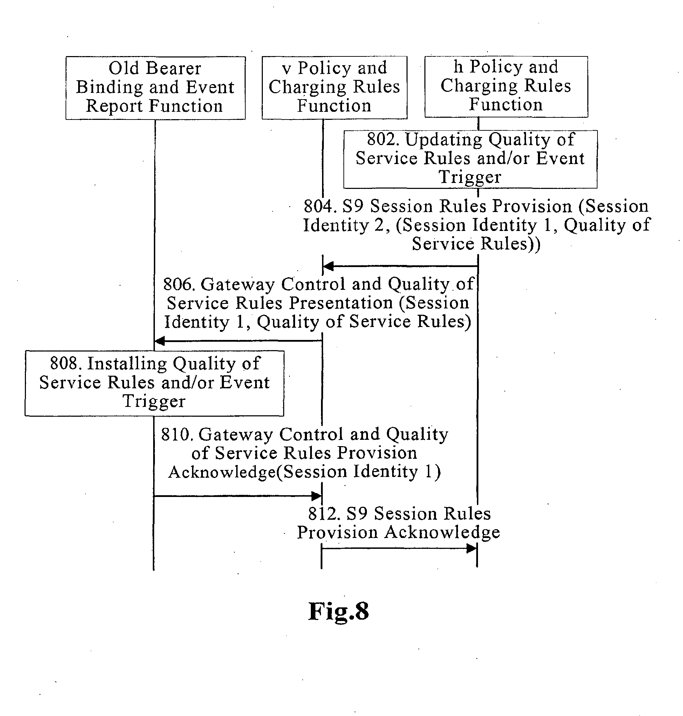

In this embodiment, the sending end PCRF is hPCRF and the receiving end PCRF is vPCRF, as shown in Figure 8. The method includes steps 802 to 812 as follow:
Step 802, hPCRF is requested to update the QoS rules and/or event triggers, sets PCC rules according to the information provided, and establishes the QoS rules, respectively, according to the access information of two BBERFs;
Step 804, hPCRF needs to simultaneously provide the QoS rules and/or the event triggers to the Old BBERF and the New BBERF. The present embodiment merely describes providing the QoS rules and/or the event triggers to the Old BBERF. The hPCRF sends to vPCRF the S9 session rule provision message (equivalent to step 402) that carries the session identity 2 assigned for S9 session, and the QoS rules newly set and the session identity 1 of Gxx session corresponding to the Old BBERF;
Step 806, vPCRF finds corresponding Gxx session according to the session identity 1 (equivalent to step 404), and sends to the Old BBERF the gateway control and QoS rules provision message that carries the session identity 1 and the QoS rules and/or the event triggers;

The vPCRF possibly modifies the QoS rules and/or the event triggers according to the present policy.
Step 808, the Old BBERF installs the QoS rules and/or the event triggers;
Step 810, the Old BBERF returns to vPCRF the gateway control and QoS rules provision acknowledge message that carries the session identity 1. In step 808, if the QoS rules fails to install the QoS rules partially or completely, the Old BBERF will report in the acknowledge message the session identity 1 and the QoS rules that fail to be installed successfully;
Step 812, vPCRF returns to hPCRF the S9 session rule provision acknowledge message. The hPCRF will accomplish the remaining IP-CAN session update flow. If the QoS rules that fail to be installed successfully are carried in step 810, vPCRF reports to hPCRF the QoS rules that fail to be installed successfully together with the session identity 1. The hPCRF determines that the QoS rules that fail to be installed successfully are associated with the Gxx session of the Old BBERF according to the session identity 1. If hPCRF determines the Old BBERF as Primary BBERF at the moment, hPCRF will delete the same QoS rules in the New BBERF, and delete corresponding PCC rules in PCEF; if hPCRF determines the Old BBERF as Non-Primary BBERF at the moment, hPCRF merely sets the status of the QoS rules in its storage information to be "Inactive", but performs no other operation.

In the other embodiments, hPCRF issues to the New BBERF the QoS rules and/or the event triggers, and the session identity 4 and the QoS rules and/or the event triggers are carried in step 804. If the New BBERF fails to install all the QoS rules successfully, the New BBERF will report the QoS rules that fail to be successfully installed to vPCRF, and vPCRF reports to hPCRF the QoS rules and the session identity 4. The operation flow of the determination by hPCRF is similar to this.

After establishing the IP-CAN session that UE accesses EPS via the trusted 3GPP access gateway with DSMIPv6 protocol, the flow of updating the QoS rules and/or the event triggers by PCRF is similar to this. Unnecessary details will not be given herein.

### Embodiment 5

This embodiment describes the flow that AF establishes Rx session and the service information is provided after IP-CAN session that UE accesses EPS via E-UTRAN or trusted non-3GPP access gateway when UE is under the roaming scenario of the local grooming and AF being in the visited place. Wherein, vPCRF terminates Gxx session of BBERF, Gx session of PCEF, and the S9 session is established between vPCRF and hPCRF. The S9 session will be used to transmit the information of the Gx session and the Rx session. When E-UTRAN is used for access, PMIPv6 protocol is used between S-GW and P-GW, and when the trusted non-3GPP access gateway is used for access, PMIPv6 protocol is used between the access gateway and P-GW. The session identity assigned by BBERF for Gxx session is the session identity 1, the session identity assigned by PCEF for Gx session is the session identity 3, and the session identity assigned by vPCRF for the S9 session is the session identity 2.

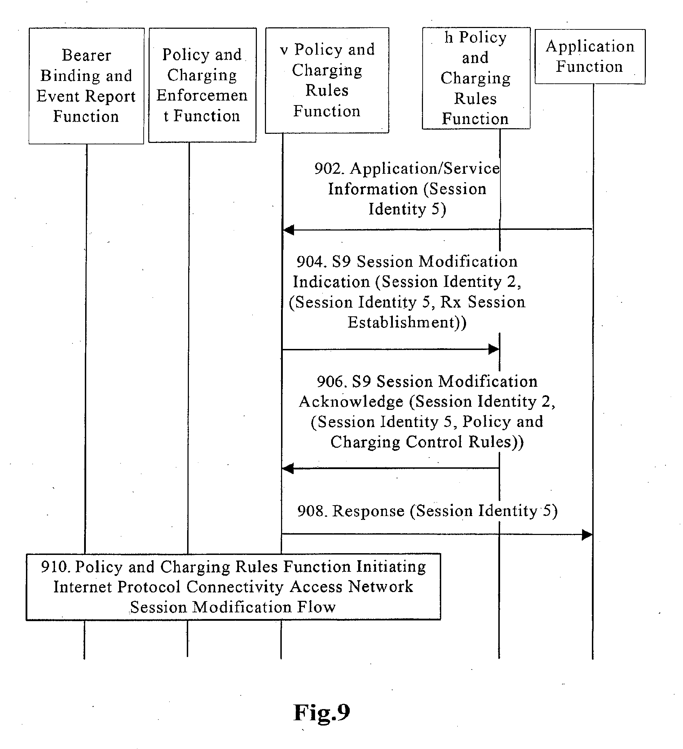

In this embodiment, the sending end PCRF is vPCRF and the receiving end PCRF is hPCRF, as shown in Figure 9. The method includes steps 902 to 910 as follow:
Step 902, since AF is in the visited network, AF sends to vPCRF the application/service information, and simultaneously establishes Rx session (AF session) between AF and vPCRF. The message carries the service information, IP address of UE, PDN identity and the session identity 5 assigned by AF for this session. AF also can issue the event triggers via this message to subscribe the event report to PCRF when the IP-CAN session changes;
Step 904, vPCRF associates the Rx session with the established IP-CAN session via the IP address, including corresponding Gxx session, Gx session and S9 session, and finds corresponding context to store the content of information. The vPCRF sends to hPCRF the S9 session modification indication message (equivalent to step 402) that carries the session identity 2 of the S9 session, the session identity 5 of the Rx session, the content of service information and/or the event triggering, and also can carry the reason why the S9 session is modified, i.e. "Rx session establishment";
Step 906, hPCRF finds corresponding context according to the session identity 2, and determines the establishment of one Rx session according to the session identity 5 and "Rx session establishment", stores the service information content and/or the event triggering associated with the Rx session in the message. The hPCRF sets the PCC rules and/or the event triggers according to the service information, subscription information and network policy, etc. The hPCRF returns to vPCRF the S9 session modification confirmation information that carries the session identity 2 assigned for the S9 session, the session identity 5 of the Rx session, and simultaneously sends to vPCRF the newly set PCC rules and/or the event triggers.
Step 908, vPCRF finds corresponding Rx session according to the session identity 5 (equivalent to the step 404), and simultaneously acquires the PCC rules and/or the event triggers of IP-CAN session. The vPCRF returns to AF the response message that carries the session identity 5;
Step 910, vPCRF extracts the QoS rules from the PCC rules acquired from the step 908, provides to PCEF the PCC rules and/or the event triggers, and provides to BBERF the QoS rules and/or the event triggers, to initiates the IP-CAN session modification flow.

The vPCRF possibly modifies the PCC rules, the QoS rules and/or the event triggers according to the present policy.

If more than on AFs provide services to UE, the other AFs can use the same flow. Each AF will assign a globally unique session identity for the Rx session when establishing this Rx session. This session identity can be used to uniquely identify the service information and/or the event triggers provided by AF in the S9 session. And according to this session identity, PCRF is capable of determining from which AF that the service information comes.

In the process of providing services, AF may modify the service information, then, AF will provide to vPCRF the modified service information using the established Rx session. The vPCRF uses the unique session identity of this Rx session for identification when providing the modified service information to hPCRF in the S9 session, so that hPCRF can determine the service information of which AF changes.

When AF determines to terminate the service, AF sends to vPCRF the message of terminating the Rx session. The vPCRF uses the session identity of the Rx session for identification when providing the termination request to hPCRF in the S9 session, thereby hPCRF can determine which Rx session is terminated and the associated service information to be deleted, so as to perform corresponding operations.

Of course, the information that vPCRF identifies a certain AF in the S9 session also can be assigned by vPCRF, moreover, the identity information uniquely identifies the IP-CAN session in this vPCRF.

After establishing the IP-CAN session that UE accesses EPS via the trusted non-3GPP access gateway with DSMIPv6 protocol, flows of establishment, modification and termination of AF is similar to this. Unnecessary details will not be given herein.

For the solution 3, the method of the present invention also can be used to solve the problem of incapability of identification when one S9 session is used to transmit Gxx or Gx session information of a plurality of IP-CAN sessions. The method is generally as follow:

### (1) Home routed scenario

UE in initial attachment establishes the first IP-CAN session. In this process, BBERF establishes the first Gxx session (the session identity is 1A) with vPCRF, vPCRF establishes the S9 session with hPCRF, PCEF establishes the first Gx session with hPCRF, wherein, Gxx session transmits the information via the S9 session. In the S9 session, 1A is used to identify the first Gxx session information to be transmitted. In the process when UE initiates to establish the second IP-CAN session, BBERF establishes the second Gxx session (the session identity is 2A) with vPCRF, PCEF establishes the second Gx session which hPCRF. The second Gxx session information is transmitted via the previously established S9 session and is identified by 2A. After this, the receipt of request or event by BBERF causes the first IP-CAN session to be changed, new QoS rules are requested, BBERF sends the request information to vPCRF via the first Gxx session, and vPCRF sends the request information to hPCRF via the S9 session. The request information is identified by the session identity 1A. The hPCRF determines that the information comes from the first Gxx session according to the session identity 1A, finds corresponding context, set new QoS rules and performs updating. The QoS rules carried in the message returned to vPCRF are also identified by 1A. The vPCRF sends to BBERF the QoS rules via the first Gxx session according to 1A. It also can be used provide QoS rules by the PCRF, IP-CAN session termination initiated by BBERF, etc.

### (2) Local breakout scenario

UE in the initial attachment establishes the first IP-CAN session. In this process, BBERF and vPCRF establish the first Gxx session (the session identity is 1A), PCEF establishes the first Gx session (the session identity is 1B) with the vPCRF, vPCRF establishes the S9 session with the hPCRF, wherein, Gx session transmits the information via the S9 session. In the S9 session, 1B is used to identity the first Gx session information to be transmitted. In the process that UE initiates to establish the second IP-CAN session, BBERF establishes the second Gxx session (the session identity is 2A) with vPCRF, PCEF establishes the second Gx session (the session identity is 2B) with the vPCRF. The second Gx session information is transmitted via the previously established S9 session and is identified by 2B. After this, the receipt of request or event by BBERF causes the first IP-CAN session to be changed, new QoS rules are requested, BBERF sends the request information to vPCRF via the first Gxx session, and vPCRF terminates the Gxx session, and the request information is sent to hPCRF via S9 session. The message is acquired from the information of the first Gxx session and identified by the session identity 1B of the first Gx session. The hPCRF determines that the information comes from the first Gx session according to the session identity 1B, finds corresponding context, establishes new QoS rules and performs updating. The PCC rules carried in the message returned to vPCRF are also identified by 1B. The vPCRF sends to PCEF the PCC rules via the first Gx session according to IB, and establishes the QoS rules according to the PCC rules, and sends to BBERF via the first Gxx session. Similarly, it also can be used to provide PCC rules by the PCRF, the IP-CAN session termination initiated by BBERF, PCEF.

### (3) Mixed scenario of the home routed and the local breakout

This scenario can be regarded as a mixture of (1) and (2), and the flow is similar thereto.

Of course, the information that vPCRF identifies a certain Gxx or Gx in the S9 session also can be assigned by vPCRF; moreover, the identification information uniquely identifies the IP-CAN session in this vPCRF.

### Apparatus Embodiment

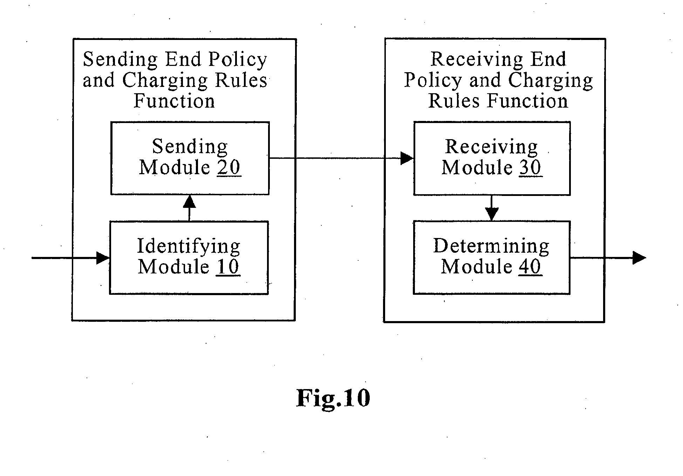

According to the embodiments of the present invention, apparatus for identifying the session information are further provided. The apparatus can be configured to accomplish the above method for identifying the session information. The apparatus are arranged in the network system comprising a sending end PCRF and a receiving end PCRF. As shown in Figure 10, the apparatus comprise: an identifying module 10, a sending module 20, a receiving module 30, a determining module 40, wherein, the identifying module 10 and the sending module 20 are arranged at the sending end PCRF, and the receiving module 30 and the determining module 40 are arranged at the receiving end PCRF. Preferably, the above sending end PCRF can be vPCRF and the receiving end PCRF can be hPCRF; or preferably, the sending end PCRF can be hPCRF and the receiving end PCRF can be vPCRF.

Specifically, the identifying module 10 is configured to identify Diameter session, wherein, the Diameter session is associated with the information of Diameter session carried by the S9 session message; the sending module 20 is connected to the identifying module 10 to send the S9 session message, wherein, the S9 session message carries the identification information identifying the Diameter session uniquely; the receiving module 30 is connected to the sending module 20 to receive the S9 session message; and the determining module 40 is connected to the receiving module 30 to determine the Diameter session corresponding to the information of Diameter session carried by the S9 session message according to the identification information.

Owing to the above, by the above technical solutions of the present invention, when the S9 session is used to transmit Diameter sessions such as Gxx, Gx and Rx, vPCRF is capable of notifying hPCRF from which one, namely, Gxx, Gx or Rx session, that the session information comes, according to the identification information carried by the S9 session for identifying the session information uniquely, and when hPCRF issues the policy control information, vPCRF is capable of issuing the policy control information to corresponding Gxx session, Gx session or AF session according to the unique identification information carried by the S9 session, which consummates the application flow of the realization of the S9 roaming interface in the policy charging control frame.

Apparently, the person skilled in the art should know that each module or each step in the present invention can be realized by the general calculating device. They can be collected in a single calculating device or assigned on the network formed by a plurality of calculating devices. Selectively, they can be realized by the program codes executable by the calculating device, therefore, they can be stored in the storing device to be executed by the calculating device, or they can be fabricated into integrated circuit modules, respectively, or modules or steps thereof are fabricated into individual integrated circuit module for the accomplishment. Thus, the present invention is not limited to the combination of any particular hardware and software.

The above is merely the preferred embodiments of the present invention and not to limit the present invention. For the person skilled in the art, the present invention may have various alterations and changes.

## Claims

1. A method for identifying session information, applied to a network system comprising a sending end Policy and Charging Rules Function entity, i.e. a sending end PCRF, a receiving end Policy and Charging Rules Function entity, i.e. a receiving end PCRF, a Bearer Binding and Event Report Function entity BBERF, Policy and Charging Enforcement Function PCEF and/or Application Function entity AF, **characterized in that** the method includes following steps:
the sending end PCRF sends to the receiving end PCRF an S9 session message in order to transmit information of Diameter session, wherein the S9 session message carries identification information identifying the Diameter session uniquely; and
the receiving end PCRF determines the Diameter session corresponding to the information of Diameter session carried by the S9 session message according to the identification information.

2. The method according to Claim 1, **characterized in that** in cases where the sending end PCRF is vPCRF and the receiving end PCRF is hPCRF, the sending end PCRF sending the S9 session message to the receiving end PCRF specifically includes:
the vPCRF sends the S9 session message to the hPCRF in order to transmit the information of one or more pieces of Diameter session received from a visited network, wherein, the S9 session message carries identification information identifying the Diameter session uniquely.

3. The method according to Claim 2, **characterized in that** when the Diameter session is established, the vPCRF sending the S9 session message to the hPCRF specifically includes:
the vPCRF terminates the Diameter session from the visited network;
the vPCRF transmits the information of Diameter session to the hPCRF using the S9 session message, the identification information carried by the S9 session message being configured to identify the Diameter session of the information of Diameter session carried;
after the hPCRF determines the Diameter session according to the identification information, the method further includes:
the hPCRF establishes context for the Diameter session and stores the information of Diameter session carried, according to the identification information.

4. The method according to Claim 2, **characterized in that** when the Diameter session is modified, the vPCRF sending the S9 session message to the hPCRF specifically includes:
the vPCRF terminates the Diameter session from the visited network;
the vPCRF transmits request and/or modification information carried by the Diameter session to the hPCRF using the S9 session message, the identification information carried by the S9 session message being configured to identify the Diameter session of the request and/or modification information carried;
after the hPCRF determines the Diameter session according to the identification information, the method further includes:
the hPCRF updates context established for the Diameter session according to the identification information.

5. The method according to Claim 2, **characterized in that** when the Diameter session is terminated, the vPCRF sending the S9 session message to the hPCRF specifically includes:
the vPCRF terminates the Diameter session from the visited network;
the vPCRF transmits termination indication information carried by the Diameter session to the hPCRF using the S9 session message, the identification information carried by the S9 session message being configured to identify the Diameter session of the termination indication information carried;
after the hPCRF determines the Diameter session according to the identification information, the method further includes:
the hPCRF deletes context for the Diameter session according to the identification information.

6. The method according to Claim 1, **characterized in that** in cases where the sending end PCRF is hPCRF and the receiving end PCRF is vPCRF, the sending end PCRF sending the S9 session message to the receiving end PCRF specifically includes:
the hPCRF sends the S9 session message to the vPCRF in order to transmit the information of one or more pieces of Diameter sessions, wherein, the S9 session message carries identification message carries identification information identifying the Diameter session uniquely;
after the hPCRF determines the Diameter session according to the identification information, the method further includes:
the vPCRF sends the information of Diameter session carried by the S9 session message to network element corresponding to the Diameter session.

7. The method according to Claim 6, **characterized in that** the hPCRF sending the S9 session message to the vPCRF further includes:
the hPCRF modifies control policy of one or more Diameter sessions, and sends the control policy to the vPCRF using the S9 session message, wherein, the identification information carried by the S9 session message is configured to identify Diameter session receiving the control policy.

8. The method according to any one of Claims 1 to 7, **characterized in that** the identification information carried by the S9 session message uses session identity of the Diameter session; or the vPCRF assigns the identification information for the Diameter session, wherein, the identification information uniquely identifies one IP-Connectivity Access Network session in the vPCRF.

9. The method according to Claim 8, **characterized in that** the Diameter session includes one selected from Gxx session, Gx session, Rx session.

10. The method according to Claim 9, **characterized in that** the BBERF is located in a Serving Gateway or a trusted non-3GPP access gateway.

11. Apparatus for a network system comprising a sending end PCRF and a receiving end PCRF for identifying session information, **characterized by** the apparatus comprising:
an identifying module, configured to identify Diameter session, wherein, the Diameter session is related to the information of Diameter session carried by S9 session message;
a sending module, configured to send the S9 session message, wherein, the S9 session message carries identification information identifying the Diameter session uniquely;
a receiving module, configured to receive the S9 session message; and
a determining module, configured to determine the Diameter session corresponding to the information of Diameter session carried by the S9 session message according to the identification information.

## Patentansprüche

1. Verfahren zum Identifizieren von Sitzungsinformationen, das auf ein Netzwerksystem angewendet wird, das Folgendes umfasst: eine am Sendeende befindliche Policy and Charging Rules Function-Entität, d. h. eine am Sendeende befindliche PCRF, eine am Empfangsende befindliche Policy and Charging Rules Function-Entität, d. h. eine am Empfangsende befindliche PCRF, eine Bearer Binding and Event Report Function-Entität BBERF, eine Policy and Charging Enforcement Function PCEF und/oder eine Application Function-Entität AF, **dadurch gekennzeichnet, dass** das Verfahren folgende Schritte umfasst:
- die am Sendeende befindliche PCRF sendet an die am Empfangsende befindliche PCRF eine S9-Sitzungsnachricht, um Informationen einer Diameter-Sitzung zu übertragen, wobei die S9-Sitzungsnachricht Identifizierungsinformationen transportiert, welche die Diameter-Sitzung eindeutig identifizieren, und
- die am Empfangsende befindliche PCRF die Diameter-Sitzung, die den Informationen einer Diameter-Sitzung entspricht, die durch die S9-Sitzungsnachricht transportiert werden, gemäß den Identifizierungsinformationen bestimmt.

2. Verfahren nach Anspruch 1, **dadurch gekennzeichnet, dass** in Fällen, wo die am Sendeende befindliche PCRF eine vPCRF ist und die am Empfangsende befindliche PCRF eine hPCRF ist, das Senden der S9-Sitzungsnachricht durch die am Sendeende befindliche PCRF an die am Empfangsende befindliche PCRF insbesondere Folgendes umfasst:
- die vPCRF sendet die S9-Sitzungsnachricht an die hPCRF, um die Informationen eines oder mehrerer Teile der Diameter-Sitzung, die von einem besuchten Netzwerk kommend empfangen wurden, zu übertragen, wobei die S9-Sitzungsnachricht Identifizierungsinformationen transportiert, welche die Diameter-Sitzung eindeutig identifizieren.

3. Verfahren nach Anspruch 2, **dadurch gekennzeichnet, dass**, wenn die Diameter-Sitzung aufgebaut wird, das Senden der S9-Sitzungsnachricht durch die vPCRF an die hPCRF insbesondere Folgendes umfasst:
- die vPCRF beendet die Diameter-Sitzung von dem besuchten Netzwerk;
- die vPCRF überträgt die Informationen der Diameter-Sitzung an die hPCRF mittels der S9-Sitzungsnachricht, wobei die Identifizierungsinformationen, die durch die S9-Sitzungsnachricht transportiert werden, dafür ausgebildet sind, die Diameter-Sitzung der transportierten Informationen einer Diameter-Sitzung zu identifizieren;
- nachdem die hPCRF die Diameter-Sitzung gemäß den Identifizierungsinformationen bestimmt hat, umfasst das Verfahren des Weiteren Folgendes:
- die hPCRF stellt den Kontext für die Diameter-Sitzung fest und speichert die transportierten Informationen einer Diameter-Sitzung gemäß den Identifizierungsinformationen.

4. Verfahren nach Anspruch 2, **dadurch gekennzeichnet, dass**, wenn die Diameter-Sitzung modifiziert wird, das Senden der S9-Sitzungsnachricht durch die vPCRF an die hPCRF insbesondere Folgendes umfasst:
- die vPCRF beendet die Diameter-Sitzung von dem besuchten Netzwerk;
- die vPCRF überträgt Anforderungs- und/oder Modifizierungsinformationen, die durch die Diameter-Sitzung transportiert werden, an die hPCRF mittels der S9-Sitzungsnachricht, wobei die Identifizierungsinformationen, die durch die S9-Sitzungsnachricht transportiert werden, dafür eingerichtet sind, die Diameter-Sitzung der transportierten Anforderungs- und/oder Modifizierungsinformationen zu identifizieren;
- nachdem die hPCRF die Diameter-Sitzung gemäß den Identifizierungsinformationen bestimmt, umfasst das Verfahren des Weiteren Folgendes:
- die hPCRF aktualisiert den für die Diameter-Sitzung festgestellten Kontext gemäß den Identifizierungsinformationen.

5. Verfahren nach Anspruch 2, **dadurch gekennzeichnet, dass**, wenn die Diameter-Sitzung beendet wird, das Senden der S9-Sitzungsnachricht durch die vPCRF an die hPCRF insbesondere Folgendes umfasst:
- die vPCRF beendet die Diameter-Sitzung von dem besuchten Netzwerk;
- die vPCRF überträgt Beendigungshinweisinformationen, die durch die Diameter-Sitzung transportiert werden, an die hPCRF mittels der S9-Sitzungsnachricht, wobei die durch die S9-Sitzungsnachricht transportierten Identifizierungsinformationen dafür eingerichtet sind, die Diameter-Sitzung der transportierten Beendigungshinweisinformationen zu identifizieren;
- nachdem die hPCRF die Diameter-Sitzung gemäß den Identifizierungsinformationen bestimmt hat, umfasst das Verfahren des Weiteren Folgendes:
- die hPCRF löscht den Kontext für die Diameter-Sitzung gemäß den Identifizierungsinformationen.

6. Verfahren nach Anspruch 1, **dadurch gekennzeichnet, dass** in Fällen, wo die am Sendeende befindliche PCRF eine hPCRF ist und die am Empfangsende befindliche PCRF eine vPCRF ist, das Senden der S9-Sitzungsnachricht durch die am Sendeende befindlichen PCRF an die am Empfangsende befindliche PCRF insbesondere Folgendes umfasst:
- die hPCRF sendet die S9-Sitzungsnachricht an die vPCRF, um die Informationen von einem oder mehreren Teilen von Diameter-Sitzungen zu übertragen, wobei die S9-Sitzungsnachricht eine Identifizierungsnachricht transportiert, die Identifizierungsinformationen transportiert, welche die Diameter-Sitzung eindeutig identifizieren;
- nachdem die hPCRF die Diameter-Sitzung gemäß den Identifizierungsinformationen bestimmt hat, umfasst das Verfahren des Weiteren Folgendes:
- die vPCRF sendet die Informationen einer Diameter-Sitzung, die durch die S9-Sitzungsnachricht transportiert werden, an ein Netzwerkelement entsprechend der Diameter-Sitzung.

7. Verfahren nach Anspruch 6, **dadurch gekennzeichnet, dass** das Senden der S9-Sitzungsnachricht durch die hPCRF an die vPCRF des Weiteren Folgendes umfasst:
- die hPCRF modifiziert die Steuerungsvorschrift einer oder mehrerer Diameter-Sitzungen; und sendet die Steuerungsvorschrift an die vPCRF mittels der 99 Sitzungsnachricht, wobei die Identifizierungsinformationen, die durch die S9-Sitzungsnachricht transportiert werden, dafür eingerichtet sind, die Diameter-Sitzung zu identifizieren, welche die Steuerungsvorschrift empfängt.

8. Verfahren nach einem der Ansprüche 1 bis 7, **dadurch gekennzeichnet, dass** die Identifizierungsinformationen, die durch die S9-Sitzungsnachricht transportiert werden, eine Sitzungsidentität der Diameter-Sitzung verwenden; oder die vPCRF weist die Identifizierungsinformationen für die Diameter-Sitzung zu, wobei die Identifizierungsinformationen eine einzelne IP-Connectivity Access Network-Sitzung in der vPCRF eindeutig identifizieren.

9. Verfahren nach Anspruch 8, **dadurch gekennzeichnet, dass** die Diameter-Sitzung eine Sitzung umfasst, die aus folgender Gruppe ausgewählt ist: eine Gxx-Sitzung, eine Gx-Sitzung und eine Rx-Sitzung.

10. Verfahren nach Anspruch 9, **dadurch gekennzeichnet, dass** sich die BBERF in einem Serving Gateway oder einem vertrauenswürdigen Nicht-3GPP Access Gateway befindet.

11. Vorrichtung für ein Netzwerksystem, das eine am Sendeende befindliche PCRF und eine am Empfangsende befindliche PCRF umfasst, zum Identifizieren von Sitzungsinformationen, **dadurch gekennzeichnet, dass** die Vorrichtung Folgendes umfasst:
- ein Identifizierungsmodul, das dafür eingerichtet ist, eine Diameter-Sitzung zu identifizieren, wobei die Diameter-Sitzung zu den Informationen einer Diameter-Sitzung, die durch eine S9-Sitzungsnachricht transportiert werden, in Beziehung steht;
- ein Sendemodul, das dafür eingerichtet ist, die S9-Sitzungsnachricht zu senden, wobei die S9-Sitzungsnachricht Identifizierungsinformationen transportiert, welche die Diameter-Sitzung eindeutig identifizieren;
- ein Empfangsmodul, das dafür eingerichtet ist, die S9-Sitzungsnachricht zu empfangen, und
- ein Bestimmungsmodul, das dafür eingerichtet ist, die Diameter-Sitzung, die den Informationen einer Diameter-Sitzung entspricht, die durch die S9-Sitzungsnachricht transportiert werden, gemäß den Identifizierungsinformationen zu bestimmen.

## Revendications

1. Procédé d'identification d'informations de session, appliqué à un système de réseau comprenant une entité de Fonction de Politique et de Règles de Facturation côté émission, c'est-à-dire une PCRF côté émission, une entité de Fonction de Politique et de Règles de Facturation côté réception, c'est-à-dire une PCRF côté réception, une entité de Fonction d'Association de Support et de Rapport d'Evénement BBERF, une Fonction d'application de Politique et de Facturation PCEF et/ou une entité de Fonction d'Application AF, **caractérisé en ce que** le procédé comprend les étapes suivantes :
la PCRF côté émission envoie à la PCRF côté réception un message de session S9 afin de transmettre des informations de session Diamètre, le message de session S9 portant des informations d'identification identifiant la session Diamètre uniquement ; et
la PCRF côté réception détermine la session Diamètre correspondant aux informations de session Diamètre portées par le message de session S9 en fonction des informations d'identification.

2. Procédé selon la revendication 1, **caractérisé en ce que**, dans les cas où la PCRF côté émission est vPCRF et la PCRF côté réception est hPCRF, la PCRF côté émission envoyant le message de session S9 à la PCRF côté réception comprend spécifiquement :
la vPCRF envoie le message de session S9 à la hPCRF afin de transmettre les informations d'une ou de plusieurs pièces de session Diamètre reçues en provenance d'un réseau visité, le message de session S9 portant des informations d'identification identifiant la session Diamètre uniquement.

3. Procédé selon la revendication 2, **caractérisé en ce que**, lorsque la session Diamètre est établie, la vPCRF envoyant le message de session S9 à la hPCRF comprend spécifiquement :
la vPCRF met fin à la session Diamètre depuis le réseau visité ;
la vPCRF transmet les informations de session Diamètre à la hPCRF à l'aide du message de session S9, les informations d'identification portées par le message de session S9 étant configurées pour identifier la session Diamètre des informations de session Diamètre portées ;
après que la hPCRF a déterminé la session Diamètre en fonction des informations d'identification, le procédé comprend en outre :
la hPCRF établit un contexte pour la session Diamètre et stocke les informations de session Diamètre portées, en fonction des informations d'identification.

4. Procédé selon la revendication 2, **caractérisé en ce que**, lorsque la session Diamètre est modifiée, la vPCRF envoyant le message de session S9 à la hPCRF comprend spécifiquement :
la vPCRF met fin à la session Diamètre depuis le réseau visité ;
la vPCRF transmet des informations de demande et/ou de modification portées par la session Diamètre à la hPCRF à l'aide du message de session S9, les informations d'identification portées par le message de session S9 étant configurées pour identifier la session Diamètre des informations de demande et/ou de modification portées ;
une fois que la hPCRF a déterminé la session Diamètre en fonction des informations d'identification, le procédé comprend en outre :
la hPCRF met à jour le contexte établi pour la session Diamètre en fonction des informations d'identification.

5. Procédé selon la revendication 2, **caractérisé en ce que**, lorsque la session Diamètre est terminée, la vPCRF envoyant le message de session S9 à la hPCRF comprend spécifiquement :
la vPCRF met fin à la session Diamètre depuis le réseau visité ;
la vPCRF transmet des informations d'indication de fin portées par la session Diamètre à la hPCRF à l'aide du message de session S9, les informations d'identification portées par le message de session S9 étant configurées pour identifier la session Diamètre des informations d'indication de fin portées ;
une fois que la hPCRF a déterminé la session Diamètre en fonction des informations d'identification, le procédé comprend en outre :
la hPCRF efface le contexte établi pour la session Diamètre en fonction des informations d'identification.

6. Procédé selon la revendication 1, **caractérisé en ce que**, dans les cas où la PCRF côté émission est hPCRF et la PCRF côté réception est vPCRF, la PCRF côté émission envoyant le message de session S9 à la PCRF côté réception comprend spécifiquement :
la hPCRF envoie le message de session S9 à la vPCRF afin de transmettre les informations d'une ou de plusieurs pièces de session Diamètre, le message de session S9 portant des informations d'identification identifiant la session Diamètre uniquement ;
une fois que la hPCRF a déterminé la session Diamètre en fonction des informations d'identification, le procédé comprend en outre :
la vPCRF envoie les informations de session Diamètre portées par le message de session S9 à un élément de réseau correspondant à la session Diamètre.

7. Procédé selon la revendication 6, **caractérisé en ce que** la hPCRF envoyant le message de session S9 à la vPCRF comprend en outre :
la hPCRF modifie une politique de commande d'une ou de plusieurs sessions Diamètre, et envoie la politique de commande à la vPCRF à l'aide du message de session S9, les informations d'identification portées par le message de session S9 étant configurées pour identifier la session Diamètre recevant la politique de commande.

8. Procédé selon l'une quelconque des revendications 1 à 7, **caractérisé en ce que** les informations d'identification portées par le message de session S9 utilisent une identité de session de la session Diamètre ; ou la vPCRF attribue les informations d'identification pour la session Diamètre, les informations d'identification identifiant uniquement une session de Réseau d'Accès à Connectivité IP dans la vPCRF.

9. Procédé selon la revendication 8, **caractérisé en ce que** la session Diamètre comprend une session sélectionnée parmi une session Gxx, une session Gx, une session Rx.

10. Procédé selon la revendication 9, **caractérisé en ce que** la BBERF se situe dans une Passerelle de Desserte ou une passerelle d'accès non-3GPP de confiance.

11. Appareil destiné à un système de réseau comprenant une PCRF côté émission et une PCRF côté réception pour identifier des informations de session, **caractérisé en ce que** l'appareil comprend :
un module d'identification, configuré pour identifier une session Diamètre, la session Diamètre étant liée aux informations de session Diamètre portées par un message de session S9 ;
un module d'émission, configuré pour envoyer le message de session S9, le message de session S9 portant des informations d'identification identifiant la session Diamètre uniquement ;
un module de réception, configuré pour recevoir le message de session S9 ; et
un module de détermination, configuré pour déterminer la session Diamètre correspondant aux informations de session Diamètre portées par le message de session S9 en fonction des informations d'identification.
